# EUROPÄISCHE PATENTANMELDUNG

(11) **EP 2 524 756 A1**
(43) Veröffentlichungstag der Anmeldung: **21.11.2012**
(21) Anmeldenummer: 12003831.0
(22) Anmeldetag: 15.05.2012
(51) Int. Cl.: B23D 15/12, B23D 23/00

(54) **Profilschneideinrichtung**

(30) Priorität: 17.05.2011 DE 102011101811
(71) Anmelder: Holt, Helmut, 49504 Lotte (DE); Wahrmann, Klaus, 49086 Osnabrück (DE)
(72) Erfinder: Holt, Helmut, 49504 Lotte (DE); Wahrmann, Klaus, 49086 Osnabrück (DE)
(74) Vertreter: Meyer, Ralph

(57) **Zusammenfassung**

Die Erfindung betrifft eine Profilschneideinrichtung zum Ablängen von Profilen aus Kunststoff- oder Metall. In einem Chassis (2) der Profilschneideinrichtung (1) sind zwei Scherblätter (3) unter Ausbildung eines Zwischenraums (8) fest angeordnet, wobei in den Scherblättern (3) Profilausschnitte (7) ausgespart sind, welche in Einbaulage der Scherblätter (3) in Überdeckung zueinander liegen und eine Profilaufnahme für die abzulängenden Profile bilden. In dem Zwischenraum (8) der Scherblätter (3) ist ein Messerblatt (4) längsbeweglich geführt. Die Profilschneideinrichtung 1 umfasst eine an dem Chassis (2) gehaltene und auf das Messerblatt (4) wirkende Hebelbetätigung (5), die mit zwei bezüglich des Messerblatts (4) gegenüberliegend angeordneten Handhebeln (6) vorgesehen ist, welche derart mechanisch gekoppelt sind, dass jeder Handhebel (6) mit dem anderen Handhebel (6) zwangsgeführt ist.

## Beschreibung

Die Erfindung betrifft eine Profilschneideinrichtung zum Ablängen von Profilen aus Kunststoff oder Metall gemäß dem Oberbegriff des Anspruchs 1.

Profile aus Kunststoff oder Metall sind an sich bekannte Konstruktionselemente, welche mit bestimmten Querschnitten bzw. Prolilgeometrien industriell gefertigt werden und in bestimmten Längen verfügbar sind. Für eine konkrete Konstruktion sind die Profile regelmäßig auf die erforderlichen Maße abzulängen.

Im Trockenbau werden im Wesentlichen offene Profile mit U-Querschnitt oder C-Querschnitt eingesetzt. Mit Profilen wird eine geeignete Rahmenkonstruktion montiert, an dem weitere Bauelemente, beispielsweise Wandelemente, angebracht werden können. Die Geometrien der verfügbaren Profile sind dabei so ausgewählt und aufeinander abgestimmt, dass sich mit wenigen Handgriffen Profile in den Innenraum eines anderen Profils einstecken lassen. Auf diese Weise können Bauelemente im Trockenbau im Allgemeinen schneller und meist günstiger als ein entsprechendes Mauerwerk oder eine Holzkonstruktion erstellt werden.

Für die Montage der vorgesehen Profilkonstruktion sind oft Profile mit individuell erforderlicher Länge bereit zu stellen. Dabei ist es eine schnelle und flexible Vorgehensweise, Profile im ausgelieferten Zustand direkt auf der Baustelle abzulängen. Bisher wurden vielfach zum Ablängen der Profile Blechscheren oder Trennschleifgeräte (Flex) eingesetzt. Das Ablängen ist dabei jedoch sehr aufwändig und die Ergebnisse zudem qualitativ nicht befriedigend, da meistens Gratbildung nicht zu vermeiden ist und gerade und glatte Schnitte sehr schwierig sind. Zudem birgt das Arbeiten mit Blechscheren, die mehrfach angesetzt werden muss und oft scharfe Grate erzeugt, erhöhte Verletzungsgefahren. Auch das Arbeiten mit Trennschleifern ist -insbesondere im Hinblick auf den charakteristischen Funkenflug- aus Gründen der Arbeitssicherheit bedenklich und gegebenenfalls gar nicht zulässig.

Zum Ablängen von Profilen sind sowohl Handhebelwerkzeuge als auch Profilschneidemaschinen mit elektromechanischem Fremdantrieb bekannt. Fremdgetriebene Maschinen können zwar große Kräfte zum Ablängen einsetzen, sind jedoch teuer und schlecht zu transportieren. Sie sind daher für den praktischen Einsatz auf Baustellen, insbesondere im Trockenbau, oft nicht geeignet.

DE 297 06 182 I1 offenbart ein Profilschneidewerkzeug zum Trennen dünnwandigen Blechprofile im Handbetrieb, bei dem eine obere Schnittplatte schwenkbar an einem Handhebel gelagert ist und über den Handhebel niedergedrückt werden kann. Das bekannte Profilschneidewerkzeug umfasst eine aus feststehenden U-Protilschienen gebildete Ausnahme für austauschbare Schnittplattenkassetten, die von je zwei Schnittplatten gleicher Abmessungen und je zwei dazwischen liegenden Führungsleisten gebildet wird.

In den Schnittplatten ist ein Profilkonturausschnitt vorhanden, welcher den Außenabmessungen der abzulängenden Profile entspricht, wobei die Ausschnitt-Tiefe für die maximal vorkommende Schenkelhöhe vorgesehen ist. Zwischen den Schnittplatten bilden Führungsleisten einen Zwischenraum, der bei dem bekannten Werkzeug gleichzeitig den Führungsraum der schwenkbaren, oberen Schnittplatte bildet.

Eine Parallelführung der oberen, beweglichen Schnittplatte soll durch Führungszungen an der Schnittplatte und die Führungsleisten der fest angeordneten Schnittplattenkassette erreicht werden.

Um die zur Trennung des Profils erforderliche Kraft an der beweglichen Schnittplatte auszubringen, ist bei dem bekannten Werkzeug ein langer Hebel vorgesehen und erforderlich. Beim Trennen des Profils wirkt auf das Werkzeug ein mit der Schnittkraft einhergehendes Drehmoment. Das bekannte Werkzeug erfordert daher einen schweren Unterbau, eine große Grundplatte oder die Einspannung in einen Schraubstock, um die beim Niederdrücken des Handhebels entstehenden Drehmomente zu kompensieren. Das bekannte Werkzeug ist daher unhandlich und -mit dem erforderlichen Unterbau- schwer. Insbesondere im Trockenbau, wo auf einer Baustelle häufig und schnell Profile auf die erforderlichen Maße einfach und mit möglichst geringem Aufwand abgelängt werden müssen, kann das bekannte, umständlich zu handhabende und zu transportierende Werkzeug diese Anforderungen nicht erfüllen.

Der vorliegenden Erfindung liegt das Problem zugrunde, eine Profilschneideinrichtung zu schaffen, welche einfach und mit geringem Aufwand insbesondere im Trockenbau einsetzbar ist und eine genaue und sichere Ablängung von Profilen aus Metall oder Kunststoff gewährleistet.

Dieses Problem wird erfindungsgemäß mit einer Profilschneideinrichtung mit den Merkmalen des Anspruchs 1 gelöst.

Erfindungsgemäß ist eine an dem Chassis der Profilschneideinrichtung gehaltene Hebelbetätigung für ein längsbeweglich geführtes Messerblatt vorgesehen, welche zwei bezüglich des Messerblatts gegenüberliegend angeordnete Handhebel umfasst. Unter einem Chassis wird dabei die mechanisch tragende Struktur der Profilschneideinrichtung verstanden. Die Handhebel sind erfindungsgemäß mechanisch gekoppelt, so dass jeder Handhebel mit dem anderen Handhebel zwangsgeführt ist Durch die mechanische Kopplung werden die Bewegungen beider Handhebel synchronisiert, das heißt, dass die Bewegung des einen Handhebels den anderen Handhebel mitnimmt und umgekehrt. Dadurch wird gefördert, dass die Bedienperson tatsächlich beide Handhebel gleichzeitig drückt und verhindert, dass an einem der beiden Handhebel kein Betätigungswiderstand anliegt. Außerdem wird durch die mechanische Kopplung und Synchronisation der Handhebel eine gleichmäßige und lineare Beaufschlagung des Messerblatts an mehreren Stellen erreicht. Die beidarmig von der Bedienperson aufgebrachte Betätigungskraft, die möglicherweise unterschiedlich stark an den jeweiligen Handhebeln aufgebracht wird, wirkt durch die Synchronisation der Handhebel gleichmäßig auf das Messerblatt. Durch Krafteinleitung im Bereich der geführten Ränder des Messerblatts wird zudem einem Verkanten des Messerblatts in der Führung entgegen gewirkt.

Dadurch, dass eine Bedienperson über zwei gegenüberliegend angeordnete Handhebel gleichzeitig auf das Messerblatt einwirkt, erzeugen die Handhebel zwei in gleicher Richtung wirkende Schnittkräfte, jedoch entgegen gesetzte Drehmomente. Die Drehmomente werden im Chassis kompensiert, so das die erfindungsgemäße Profilschneideinrichtung keine weitere Befestigung benötigt und zudem klein und handlich ausgebildet werden kann. Die Profilschneideinrichtung weist dadurch ein geringes Gewicht auf und kann bequem per Hand zur einem Einsatzort transportiert werden oder auf einer Baustelle bei Bedarf auf dem Boden verschoben werden.

Da die resultierende Schnittkraft zum Trennen des Profils über zwei Hebel aufgebracht werden kann und die erforderliche Kraft pro Hebel daher deutlich gegenüber Einhebelbetätigungen reduziert ist, wird das Bedienen der erfindungsgemäßen Profilschneideinrichtung als leicht empfunden. Die gegenüberliegend angeordneten Handhebel sind in einer gemeinsamen Ebene schwenkbar und leicht von einer Bedienperson handhabbar. Die beidseitige Betätigung des Messerblatts über zwei flügelartig gegenläufige Handhebel fördert zudem einen möglichst linearen Krafteintrag in das Messerblatt.

Vorzugsweise sind die Handhebel derart mechanisch gekoppelt, dass die Handhebel beim Schneidevorgang in einer der Bewegungsrichtung des Messerblatts entsprechenden Richtung bewegt werden. Darunter ist zu verstehen, dass eine lineare Komponente der Schwenkbewegung in Bewegungsrichtung des Messerblatts gerichtet ist, so dass die Schwenkbewegung der Handhebel der Bewegungsrichtung des Messerblatts folgt.

Die erfindungsgemäße Profilschneideinrichtung kann zum Ablängen von Profilen einfach auf den Boden abgestellt werden und benötigt wenig Arbeitsraum Für die Bedienperson. Zum Ablängen eines Profils wird das Profil durch die dafür in den feststehenden Scherblättern vorgesehene Profilaufnahme geführt und bei Erreichen der gewünschten Schnittstelle das Messerblatt niedergedrückt. Dabei sind die Handhebel gemäß einer vorteilhaften Ausführungsform derart mechanisch gekoppelt, dass die Handhebel beim Schncidvorgang in einer der Bewegungsrichtung des Messerblatts entsprechenden Richtung bewegt werden. Darunter ist zu verstehen, dass eine lineare Komponente der Schwenkbewegung in Bewegungsrichtung des Messerblatts gerichtet ist, so dass die Schwenkbewegung der Handhebel der Bewegungsrichtung des Messerblatts folgt. Auf diese Weise werden die Handhebel zur Bewegung des Messerblatts in Richtung des Bodens verschwenkt.

Dadurch, dass die Profilschneideeinrichtung auf den Boden aufgestellt werden kann und somit eine Gegenkraft zur Handkraft der Bedienperson beim Niederdrücken der Handhebel wirkt, ist ein ergonomischer Bewegungsablauf für die Bedienperson möglich.

In einer vorteilhaften Ausgestaltung der Erfindung sind die Handhebel über einen Kniehebel mit dem Messerblatt verbunden, so dass eine kräftige Betätigung des Messerblatts gegeben ist. Die Kniehebel sind dabei sowohl am Handhebel als auch an dem Messerblatt drehbeweglich gelagert. Bevorzugt greifen die Kniehebel im Bereich der geführten Seitenränder des Messcrblatts an, so dass die Kniehebel in einer symmetrischen Konstruktion mit geringen Konstruktions- und Montageaufwand angebracht werden können und optimal wirken. Mittels der Kniehebel wird ferner die Bewegungsrichtung der Handhebel, das heißt deren Komponente parallel zur Bewegungsrichtung des Messerblatts, mit der Bewegungsrichtung des Messerblatts gleichgeschaltet.

Eine vorteilhafte Ausführung einer mechanischen Kopplung der Handhebel mit einer zwingenden Mitnahme des jeweils anderen Handhebels ist gegeben, wenn die Handhebel im Bereich ihres Angelpunktes eine Verzahnung tragen, welche in Einbaulage mit der Verzahnung des jeweils anderen Handhebels kämmt. Die Enden der Handhebel im Bereich des Angelpunktes sind dabei konzentrisch zum Angelpunkt ausgebildet und tragen auf einem Umfangsbereich die Verzahnung. Dadurch ist eine auf dem jeweils anderen Handhebel abwälzbare, verzahnte Wälzfläche gegeben. Die Handhebel bewegen sich dabei zwangsgeführt in einer Ebene ähnlich der Hebel eines Flügelkorkenziehers.

In einer vorteilhaften Ausführungsform der Erfindung weisen die Handhebel jeweils eine abnehmbare Verlängerungsstange auf. Die Handhebel weisen dabei einen am Chassis befestigtes, den Angelpunkt bildenden Kämm-Exzenter auf, welcher mechanisch tragfähig ausgebildet ist. Der Kamm-Exzenter ist um den Angelpunkt schwenkbar am Chassis befestigt und weist die Verzahnung auf, welche mit der Verzahnung des Kämm-Exzenters des anderen Handhebels kämmt und über den Zahneingriff die Handhebel mechanisch koppelt. Der Kämm-Exzenter ist mit einer exzentrisch zum Angelpunkt liegenden Aufnahme für einen Kniehebel versehen, welcher auf das bewegliche Messerblatt wirkt.

Der Kämm-Rxzenter ist vorzugsweise ein Metallteil und weist einen Zapfen auf, auf den die Verlängerungsstange aufgesteckt wird. Die Verlängerungsstange kann ein leichtes Rohr sein. Zur Sicherung der Prolilschneideinrichtung können die abnehmbaren Verlängerungsstangen mit Bügeln, beispielsweise federnden und selbsttätig einrastenden Drahtbügeln, an dem Kämm-Exzenter befestigt werden.

Mit den abgenommenen Verlängerungsstangen liegt ein kompaktes Werkzeug vor, welches leicht zu transportieren ist und durch Aufstecken der Verlängerungsstangen augenblicklich betriebsbereit ist. Nach Benutzung der erfindungsgemäßen Profilschneideinrichtung können die Verlängerungsstangen abgenommen werden, um die Profilschneideinrichtung bedarfsweise an einen anderen Einsatzort zu transportieren.

Die Profilausschnitte in den fest angeordneten Scherblättern weisen eine dem/den abzulängenden Profilen entsprechende Geometrie auf, so dass an dem gesamten Umriss des abzulängenden Profils Scherkanten gebildet sind und ein sauberes Abscheren beim Trennen des Profils ohne Gratbildung gefördert ist. Die Scherblätter bilden dabei mit den Profilausschnitten eine geschlossene Profilaufnahme aus. Insbesondere bei offenen Profilen, wie sie im Trockenbau häufig verwendet werden, wird ein Abknicken der Schenkelabschnitte des abzulängende Profils vermieden, da die Profilschenkel über ihre gesamte Länge von dem Profilausschnitt beidseitig umgebenen sind. Die Profilausschnitte werden dabei mit einem Übermaß gegenüber den Abmessungen der abzulängenden Profile ausgebildet, so dass die Profile in die Profilaufnahme eingeschoben werden können.

Die Profilschneideinrichtung weist vorteilhaft einen Längenanschlag für die abzulängenden Profile auf, welcher bezüglich der Lage des Messerblatts einstellbar ist oder eine auf die Lage des Messerblatts bezogene Skalierung o.Ä. aufweist. Auf diese Weise kann dass abzulängende Profil genau bis zur abzutrennenden Länge durch die Scherblätter geschoben werden.

In bevorzugter Ausführungsform der Erfindung entspricht die Geometrie der Profilausschnitte mehreren in Überdeckung liegenden Geometrien verschiedener Profile, so dass ohne Umrüstung der Scherblätter mit der Profilschneideinrichtung verschiedene Profile bearbeitet werden können. Beispielsweise kann die Geometrie der Profilausschnitte mehrere U-Profile oder C-Profile mit unterschiedlichen Stegbreiten und/oder Schenkellängen abdecken.

Vorteilhaft wird die Geometrie der Profilausschnitte in einem Winkel von 2° bis 6° gegenüber einer Horizontalen geneigt angeordnet. Durch die Schräglage gegenüber einer Horizontalen werden die Schneiden des Messerblatts während des Eingriffs in das Profilmaterial relativ zum Profil verschoben, das heißt, das mit der Position des Messerblatts die augenblicklich in Eingriff stehenden Abschnitte der Schneide gegenüber dem abzulängenden Profil verschoben werden. Dadurch wird der Verschleiß des Messerblatts reduziert. Ein optimaler Kompromiss zwischen Schneidwirkung und Verschleißschutz wird in einem Winkelbereich von 2° bis 6° gegenüber einer Horizontalen erreicht. Die Horizontale steht dabei senkrecht zur Bewegungsrichtung des Messerblatts.

Es hat sich gezeigt, dass optimale Schnittgüte und minimaler Verschleiß bei einem Winkel der Geometrie der Profilausschnitte gegenüber der Horizontalen von 4° ein optimaler Kompromiss zwischen Schnittgüte und Verschleiß gegeben ist.

In bevorzugter Ausgestaltung der Erfindung weist das Messerblatt eine Schneide mit Schneidabschnitten auf, welche gegenüber benachbart liegenden Schneidabschnitten m.it unterschiedlichen Schneidenwinkeln gegenüber einer Horizontalen des Messerblatts ausgebildet sind. Die Schneidabschnitte sind dabei in Abstimmung mit der Geometrie der Profilausschnitte derart angeordnet, dass den Profilabschnitten des Profilausschnitts, welche sich im wesentlichen in Bewegungsrichtung des Messerblatts erstrecken, Sehneidabschnitte mit größerem Schneidewinkel zugeordnet sind als den Profilabschnitten des Profilausschnitts, welche sich im wesentlichen in horizontaler Richtung erstrecken. Dadurch ist sichergestellt, dass in Bereichen von Abwinkelungen des Profils, beispielsweise beim Übergang von Stegen und den senkrecht dazu stehenden Schenkeln eines U-Profils oder eines C-Prolils, eine erhöhte Schnittleistung des Messerblatts bereit steht.

Die Folge von Schneidabschnitten mit kleineren und anschließend größeren Schneidenwinkeln wird mit dem Profilausschnitt abgestimmt. Dabei liegen die Schneidabschnitte des Messerblatts so, dass beim Eingriff des Messerblatts in das Profil kurz vor dem Erreichen eines abgewinkelten Profilabschnitts der Schneidenwinkel erhöht ist. An diesen Stellen mit abgewinkelten Wandbereichen des Profils ist zum Trennen des Profils kurzzeitig eine erhöhte Schnittkraft erforderlich. Durch die Erhöhung des Schneidenwinkels an diesen Stellen wird der zeitliche Verlauf der Schnittkraft während des Hubs des Messerblatts harmonisiert. Die Bedienungsperson der Profilschneideinrichtung empfindet einen angenehmen linearen Verlauf der aufzubringenden Schnittkraft während des Eingriffs des Messerblatts.

Die Linearität des Schnittkraftverlaufs während des Eingriffs des Messerblatts ist weiter verbessert, wenn die Schneidabschnitte in unterschiedlichen axialen Höhen bezüglich der Bewegungsrichtung des Messerblatts in derartiger Abstimmung mit dem Profilausschnitt liegen, dass die Schneide Stoßstellen von winklig zueinander liegenden Profilabschnitten nacheinander erreicht.

In vorteilhafter Ausgestaltung der Erfindung weist die Schneide wenigstens eine Spitze auf, welche einem im Wesentlichen quer zur Bewegungsrichtung liegenden Bereich des Prolilausschnitts zugeordnet ist. Die Spitze teilt dabei den Span und ermöglicht eine optimale Folge von Schneidabschnitten mit unterschiedlichen Schneidenwinkeln. Dadurch, kann jeder gewünschten Stelle des abzulängenden Profils ein Abschnitt der Schneide mit einer Vergrößerung des Schneidenwinkels zugewiesen werden. Durch die Abfolge von Schneidenabschnitten mit in spiegelbildlichen Richtungen der Schneidenwinkel beiderseits der Spitze kann ausgeschlossen werden, dass sich der Span in Richtung des Inneren des Profils bildet und vielmehr nach Außen ausfällt.

Die Spitze teilt bei offenen U-Profilen oder C-Profilen, wie sie häufig im Trockenbau verwendet werden, den Grundsteg des Profils, so dass zwei Teilspäne beiderseits der Spitze gebildet werden. Bei Profilsausschnitten, welche für mehrere Profile vorgesehen sind, können mehrere Spitzen vorgesehen sein, um den Span an einer geeigneten Stelle zu teilen und eine Spanbildung nach außen zu gewährleisten.

Der Verlauf der Schneidenabschnitte wird so mit dem Profil abgestimmt, dass vermieden wird, dass Wandabschnitte des Profils beim Hub des Messerblatts übereinander geklappt werden. Auf diese Weise ist während des gesamten Hubs eine im Wesentlichen gleiche Wandstärke des Profils zu teilen und daher über den Hub der Handhebel eine homogene Betätigungskraft aufzubringen.

Ein optimaler Kompromiss zwischen einem möglichst linearen Schnittkraftverlauf und einem sauberen Schnitt mit glatter Schnittkante wird durch eine Kombination der Flügel-Betätigungseinrichtung mit zwei Handhebeln und einer geeigneten Auswahl und Abstimmung des Messerblatts und der Scherblätter erreicht.

Zur Umrüstung der Profilschneideinrichtung auf andere Profile, die nicht in der Profilaufnahme der Scherblätter aufgenommen werden können, können mit wenigen Handgriffen für diese Profile vorgesehene Scherblätter und gegebenenfalls Messerblätter eingesetzt werden. Zur Verringerung des Verschleißes und zur Verbesserung der Handhabbarkeit bei der Montage sind die Scherblätter als im Wesentlichen ebene Platten ausgebildet und bestehen aus einem härtbaren Werkzeugstahl.

Weitere Merkmale der Erfindung ergeben sich aus den Unteransprüchen und aus der anschließenden Beschreibung eines Ausführungsbeispiels der Erfindung. Es zeigen:
- Fig. 1: eine Frontansicht einer erfindungsgemäßen Profilschneideinrichtung,
- Fig. 2: eine Explosionsdarstellung der Profilschneideinrichtung gemäß Fig. 1,
- Fig. 3: eine vergrößerte Darstellung des Ausschnitts 1 in Fig. 1.

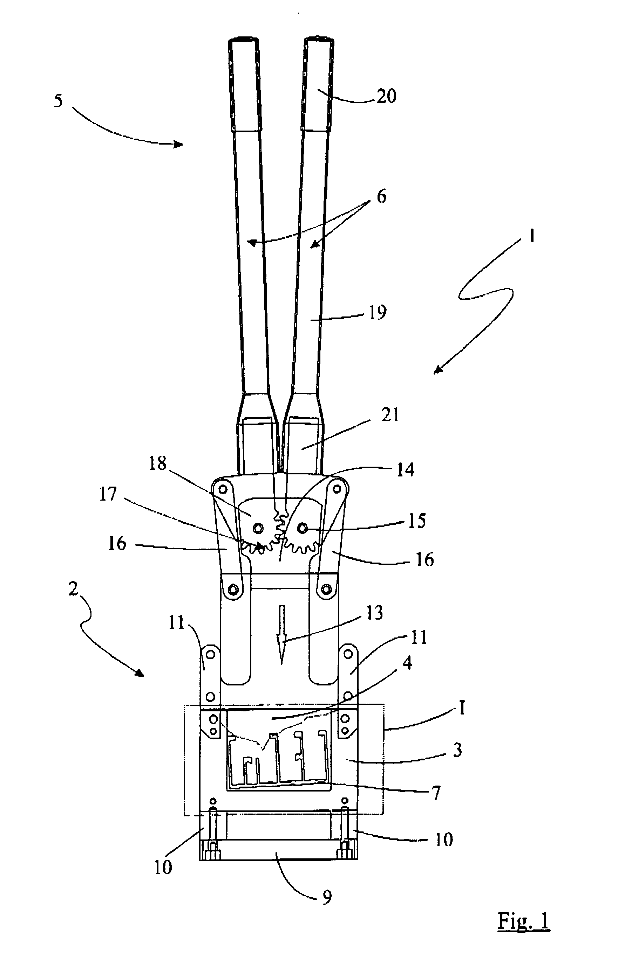

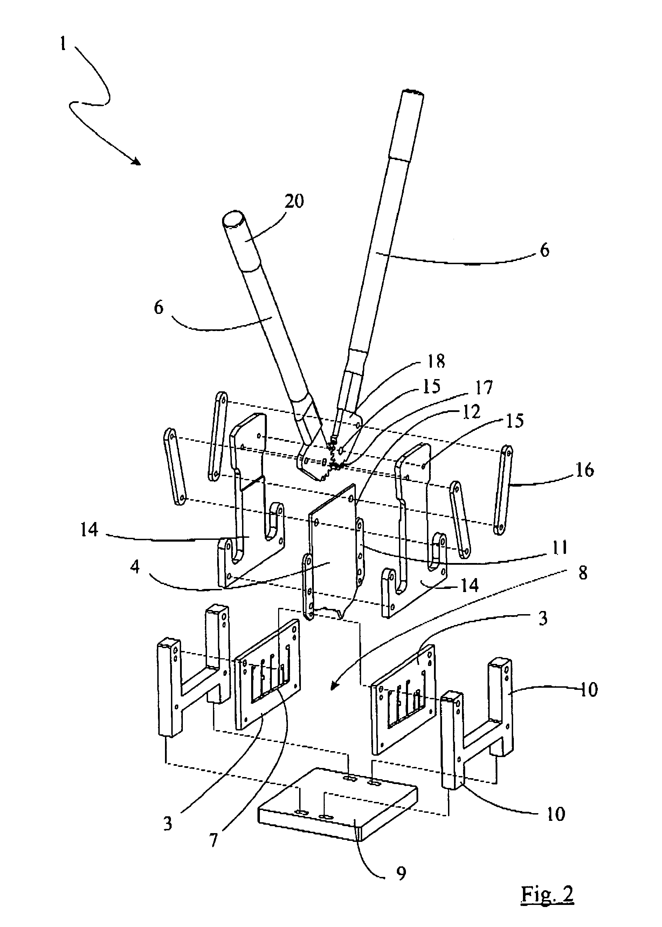

Fig. 1 und Fig. 2 zeigen eine Profilschneideinrichtung 1 zum Ablängen von Trockenbauprofilen aus Metall. Die Profilschneideeinrichtung 1 umfasst ein mechanisch tragendes Chassis 2, in dem zum Trennen von Profilen zwei festliegende Scherblätter 3 und ein bewegliches Messerblatt 4 angeordnet sind. Das Messerblatt 4 ist mittels einer Hebelbetätigung 5 bewegbar, welche zwei mechanisch gekoppelte Handhebel 6 umfasst.

Die Scherblätter 3 sind als rechteckige Platten mit gleichen Abmessungen aus einem härtbaren Werkzeugstahl gefertigt. In jedem Scherblatt 3 ist ein Profilausschnitt 7 ausgespart. In Einbaulage im Chassis 2 liegen die Scherblätter 3 in Übcrdcckung zueinander, wobei die dadurch ebenfalls in Überdeckung liegenden Profilausschnitte 7 eine Profilaufnahme für die abzulängenden Profile bilden. Die Profilausschnitte 7 entsprechen der Geometrie der abzulängenden Profile, so dass die Profile zur Bearbeitung in die Profilaufnahme eingeführt und durch die Scherblätter 3 geschoben werden können.

Die Scherblätter 3 mit den Profilaussehnitten 7 sind fest in dem Chassis 2 unter Ausbildung eines Zwischenraums 8 angeordnet, in dem das Messerblatt 4 beweglich ist. Das Chassis 2 umfasst hierzu eine Grundplatte 9, auf der vier Holme 10 in rechteckiger Formation befestigt sind. Die Holme 10 sind im vorliegenden Ausführungsbeispiel durch zwei H-förmigen Bauteile mit jeweils zwei untereinander durch eine Querstrebe verbundenen Holmen 10 gebildet, welche jeweils zwei Holme 10 in einer gemeinsamen Ebene aufweisen. Die Holme 10 sind an der Grundplatte 9 verschraubt.

Mit der Höhe der im Wesentlichen horizontal liegenden Quers-treben ist die Lage der Profilausschnitte in den Scherblättern abgestimmt. Auf diese Weise bilden die Querstreben der Holme 10 eine Abstützung der abzulängenden Profile, wenn sie in die Profilausschnitte der Scherblätter eingeschoben sind bzw. während der Einführung der Profile in die Profilschneideinrichtung. Zur Befestigung an den Holmen 10 weisen die Scherblätter 3 in ihren Ecken jeweils Bohrungen auf. Die Holme 10 sind mit entsprechenden Bohrungen versehen, so dass eine Befestigung der Scherblätter 3 insbesondere durch Schrauben möglich ist. Um eine genau Überdeckung der Scherblätter 3 sicherzustellen, sind Passstifte vorgesehen.

Die Profilschneideinrichtung 1 weist einen nicht dargestellten Längenanschlag für die abzulängenden Profile auf. Der Längenanschlag ist in einem Ausführungsbeispiel bezüglich der Lage des Messerblatts einstellbar und längsbeweglich in dem Chassis 2 aufgenommen. In einem weiteren Ausführungsbeispiel ist der Längenanschlag fest mit dem Chassis 2 verbunden und weist eine auf die Lage des Messerblatts bezogene Skalierung o.Ä. Das abzulängende Profil wird bis zur Anlage an dem eingestellten Längenanschlag durch die Profilausschnitte 7 der Scherblätter 3 geschoben, so dass sich das Messerblatt 4 auf Höhe der vorgesehenen Trennstelle des Profils befindet.

Um den für das Messerblatt 3 vorgesehenen Zwischenraum 8 auszubilden, werden an den Holmen 10 zu beiden Seiten der Scherblätter 3 jeweils Führungsschienen 11 angeordnet. Die Stärke der Führungsschienen 11 bestimmt dabei die Spaltbreite des Zwischenraums 8 und ist mit der Wandstärke des Messerblatts 4 abgestimmt. Die Stärke der Führungsschienen 11 ist dabei größer als die Stärke des Messerblatts 4, so dass das Messerblatt 4 in dem Zwischenraum 8 bewegbar ist und ein optimaler Schneidspalt voreingestellt werden kann.

Die Führungsschienen 11 sind parallel angeordnet und bilden eine Längsfuhrung für das Messerblatt 4. Das Messerblatt 4 hat daher parallele Seitenränder 12. Die Breite des Messerblatts 4 gemäß dem Abstand der Seitenränder 12 entspricht unter Abzug eines für die Führung erforderlichen Spalts dem Abstand der Führungsschienen 11. Durch die Führungsschienen 11 ist eine bezüglich der Grundplatte 9 vertikale Führung des Messerblatts 4 in Bewegungsrichtung 13 gegeben.

Zu dem mechanisch tragenden Chassis 2 gehören auch zwei Trägerplatten 14 für die Hebelbetätigung 5. Die Trägerplatten 14 sind in Überdeckung zueinander miteinander unter Einspannung der Führungsschienen 11 miteinander verbunden. Die Hebelbetätigung 5 umfasst zwei im Ausführungsbeispiel abnehmbare Handhebel 6, welche jeweils zwischen die Trägerplatten 14 reichen und dort schwenkbeweglich um ihren jeweiligen Angelpunkt 15 gelagert sind. Die Angelpunkte 15 der Handhebel 6 liegen in einer horizontalen Ebene zwischen den Führungsschienen 11, so dass die Handhebel 6 in einer Parallelebene des Messerblatts 4 bewegbar sind.

Die Handhebel 11 wirken jeweils über Kniehebel 16 auf das Messerblatt 4. Die Kniehebel 16 sind stangenförmig ausgebildet und dabei an jeweils einem Ende an dem Handhebels 11 und am jeweils anderen Ende im Bereich der Seitenränder 12 des Messerblatts 4 schwenkbeweglich aufgenommen, beispielsweise über Bolzen. Die Kniehebel 16 sind im gezeigten Ausführungsbeispiel paarweise zu beiden Seiten des Messerblatts 3 angeordnet, so dass an beiden Seitenrändern 12 des Messerblatts jeweils ein Kniehebel 16 an der Vorderseite des Messerblatts 4 und ein Knichebel 16 an der nicht sichtbaren Rückseite des Messerblatts 4 angeordnet ist. Auf diese Weise ist eine kräftige und symmetrische Kraftübertragung gewährleistet. Die Kniehebel 16 übersetzen die Schwengbewegung der Handhebel 6 in eine Bewegungsrichtung 13 des Messerblatts 4 entsprechend der Richtung der Komponente der Schwenkbewegung der Handhebel parallel zur Bewegungsrichtung 13. Dadurch ist ein schnelles und einfache Ablängen Profilen möglich mit einem ergonomischen Bewegungsablauf für die Bedienperson, indem die Profilschneideinrichtung 1 auf den Boden abgestellt wird, das Profil durch die Profilausschnitte 7 der Scherblätter 3 geschoben wird und die Bedienperson die Handhebel 6 in Richtung des Bodens niederdrückt.

In der in Fig. 1 gezeigten Ausgangsstellung liegen die Handhebel 6 in senkrechter Ausrichtung nebeneinander. In dieser Ausgangsstellung liegt das Messerblatt 4 beabstandet von den Scherblättern 3 und gibt den Durchgang der Profilausschnitte 7 frei, so dass ein abzulängendes Profil eingeführt werden kann. Durch Auseinanderdrücken der Handhebel 6 wird das Messerblatt 4 nach Art einer Guillotine in Bewegungsrichtung 13 niedergedrückt und trennt das eingeführte Profil.

Die Handhebel 6 sind an ihren in das Chassis 2 ragenden Enden mit einer Verzahnung 17 versehen, welche eine mechanische Kopplung der Handhebel 6 und Synchronisation ihrer Bewegungen ermöglicht. Die Handhebel 6 tragen die Verzahnung 17 im Bereich ihres Angelpunktes 15, wobei die Verzahnung 17 konzentrisch zum Angelpunkt 15 ausgebildet ist und in Einbaulage der Handhebel 6 mit der Verzahnung 17 des jeweils anderen Handhebels 6 kämmt. Durch die Verzahnung 17 werden die Handhebel 6 ähnlich einem Flügelkorkenziehcr synchronisiert, so dass eine gleichmäßige Übertragung der über die Handhebel von der Bedienperson aufgebrachten Kräfte auf das Messerblatt 4 gewährleistet ist. Die Aufteilung der zu erzeugenden Schnittkraft auf zwei Handhebel 6 und die Synchronisation der Hebelbewegung ermöglichen eine lineare Übertragung von Schnittkräften auf das Messerblatt 4.

Die Handhebel 6 bestehen jeweils aus einem Kämm-Exzenter 18, welcher zwischen den Trägerplatten 14 des Chassis 2 um den Angelpunkt 15 drehbar gelagert ist und die Verzahnung 17 auf weist, und einer Verlängerungsstange 19. Über die kämmende Verzahnung 17 koppeln die Kämm-Exzenter 18 mechanisch die Handhebel 6. Exzentrisch zum Angelpunkt 15 sind an den Kamm-Exzentern 18 die Knichebel 16 schwenkbar gelagert.

Die Verlängerungsstange 19 trägt an ihrem freien Ende einen Handgriff 20 für die Bedienperson und wird auf einen entsprechenden Zapfen 21 des Kämm-Exzenters 18 aufgesteckt. Die Verlängerungsstangen 19 sind leichte Rohre, welche rasch aufsteckbar und abnehmbar sind, so dass die Profilschneideinrichtung mit abgenommenen Verlängerungsstangen leicht zu transportieren ist. Die auf die Zapfen 21 gesteckten Verlängerungsstangen 19 werden von klapp- und einrastbaren Bügeln in axialer Richtung gesichert. Die Handhebel 6 sind in einem nicht gezeigten Ausführungsbeispiel einteilig ausgebildet.

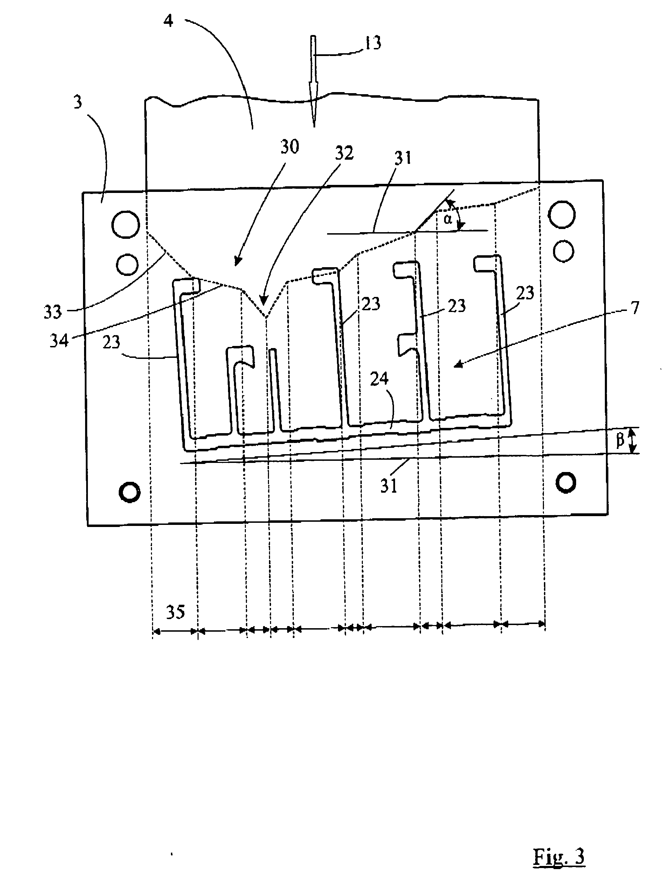

Die Scherplatten 3 sind von einem Profilausschnitt 7 durchsetzt, welcher der Geometrie des zu bearbeitenden Profils entspricht. Wie in der Vergrößerung gemäß Fig. 3 erkennbar ist, weist die Scherplatte 3 im gezeigten Ausführungsbeispiel einen Profilausschnitt 7 auf, der die Bearbeitung von U-Profilen und C-Profilen mit unterschiedlichen Abmessungen gestattet. Hierzu ist ein Profilausschnitt 7 in die Scherplatte 3 eingearbeitet, dessen Geometrie mehreren in Überdeckung liegenden Geometrien verschiedener Profile entspricht. Im Trockenbau werden vorwiegend offene Profile verarbeitet, welche in der Grundform eines U-Profils einen Hauptsteg aufweisen und zwei Schenkel, die sich an den Enden des Hauptstegs abgewinkelt anschließen.

Um offene Profile aufnehmen zu können, weist der Profilatisschnitt 7 mehrere Schenkclausschnitte 23 und einen Hauptstegausschnitt 24 auf, dessen Länge den Abmessungen des größten zu bearbeitenden Profils entspricht. Der Hauptstegausschnitt 24 dient der Aufnahme des Hauptstegs eines offenen Profils, welcher der offenen Seite des Profils gegenüberliegt. Kleinere Profile werden durch andere Ausnehmungen in dem Profilausschnitt 7 geschoben, welcher mit seiner Geometrie die Querschnitte einer Vielzahl von Profilen abdeckt. Die Scherblätter werden in einer solchen Lage in das Chassis 2 eingespannt, dass die Öffnung der offenen Profile bzw. der Geometrie der Profilaufnahme 7 dem Messerblatt 4 zugewandt liegt.

Die Scherblätter 3 weisen seitlich der Profilausschnitte 7 jeweils drei Bohrungen auf, von denen jeweils eine Bohrung zur Aufnahme von Schraubenschäften der Verschraubung mit den Holmen 10 (Fig. 2), eine zweite Bohrung zur Aufnahme von Passstiften zur Sicherung der Überdeckung der Scherblätter 3 und eine dritte Bohrung als Gewindebohrung ausgebildet sind.

Eine Schneide 30 des Messerblatts 4 ist in einem Schneidwinkel gegenüber einer Horizontalen 31 des Messerblatts 4 ausgebildet, so dass die Schneide aufgrund des Schneidenwinkels leichter in das abzulängende Profil eindringen kann. Die Horizontale 31 liegt orthogonal zur Bewegungsrichtung 13 des Messerblatts 4 bzw. zu den Seitenrändern 12 des Messerblatts 4. In Einbaulage des Messerblatts 4 liegt die Horizontale 31 parallel zur Ebene der Grundplatte 9.

Im gezeigten Ausführungsbeispiel weist die Schneide 30 eine Spitze 32 auf, an die sich beidseitig Schneidabschnitte 33, 34 der Schneide 30 anschließen. Die Spitze 32 liegt in einem Bereich der Schneide 30, welche eine Öffnung des zu trennenden Profils überstreicht. Im gezeigten Ausführungsbeispiel mit einem Profilausschnitt 7, der für mehrere Profile ausgebildet ist, liegt die Spitze 32 der Schneide 30 in einem Abschnitt des Profilausschnitts 7, welcher bei den Geometrien sämtlicher bearbeitbarer Profilgeometrien in Überdeckung mit der offenen Profilseite liegen.

Die Schneide 30 weist eine Vielzahl von Schneidabschnitten 33, 34 auf, welche gegenüber benachbart liegenden Schneidabschnitten 33, 34 mit unterschiedlichen Schneidenwinkeln α gegenüber der Horizontalen 31 des Messerblatts 4 ausgebildet sind. Die Schneidabschnitte 33, 34 mit unterschiedlichen Schneidenwinkeln α bestreichen während des Messerhubs unterschiedlich breite Streifen 35 des Profilsausschnitts 7, welche in der Zeichnungsfigur durch Doppelpfeile verdeutlicht sind.

Die Schneidabschnitte 33, 34 sind in Abstimmung mit der Geometrie der Profilausschnitte 7 derart angeordnet, dass den Bereichen des Profilausschnitts 7, welche sich im wesentlichen in Bewegungsrichtung 13 des Messerblatts 4 erstrecken, Schneidabschnitte 33 mit größerem Schneidenwinkel α zugeordnet sind als den Bereichen des Profilausschnitts 7, welche sich im wesentlichen in horizontaler Richtung erstrecken. Die Übergänge zwischen den Schneidabschnitten 33, 34 liegen so, dass im zeitlichen Ablauf des Schnitts der Schneidenwinkel α vergrößert ist, wenn das Trennen einer abgewinkelten Stelle des Profils ansteht, beispielsweise die Stoßstelle eines Stegs und eines Schenkels.

Die Schneidabschnitte 33, welche den Bereichen des Profilausschnitts 7 zugeordnet sind, die sich im Wesentlichen in Bewegungsrichtung 13 des Messerblatts 4 erstrecken, weisen etwa den gleichen Schneidenwinkel α auf. Entsprechend sind auch die Schneidabschnitte 34, welche den Bereiche des Profilausschnitts 7 zugeordnet sind, die sich im Wesentlichen in horizontaler Richtung des Messerblatts 4 erstrecken, mit gleichen Schneidenwinkeln α ausgebildet.

Die Trennung von abgewinkelten Bereichen eines Profils, das heißt den Eckpunkten des Profils, erfordert eine höhere Schnittkraft, welche durch die Erhöhung des Schneidenwinkcls erzeugt werden kann, ohne dass der Kraftaufwand in der Hebeleinrichtung 5 spürbar wird. Die Linearität des Schnittkraftverlaufs über den gesamten Messerhub ist weiter verbessert durch die axiale Anordnung der Schneidabschnitte 33, 34 auf dem Messerblatt 4. Die Schneidabschnitte 33, 34 sind in Abstimmung mit dem Profilausschnitt 7 derart angeordnet, dass während des Messerhubs die Schneidabschnitte 33, 34 nacheinander in Eingriff gebracht werden.

Um den Verschleiß des Messerblatts 4 zu verringern, ist die Geometrie der Profilausschnitte 7 in einem Neigungswinkel β von etwa 4° gegenüber der Horizontalen 31 geneigt ausgebildet. Der Neigungswinkel β ist abgestimmt mit der Folge der Schneidabschnitte 33, 34 des Messerblatts 4 und deren Schneidenwinkeln α. Durch die optimale Abstimmung der Schneidabschnitte 33, 34 des Messerblatts 4 und des Neigungswinkels β der Profilausschnitte 7 kann in Kombination mit der Flügelbetätigung durch zwei mechanisch gekoppelte Handhebel 6 auf einfache und sichere Weise eine genaue Trennung jedes Profils mit einem relativ linearen Kraftaufwand für die Bedienperson vorgenommen werden.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist nicht auf die beschriebenen bzw. beanspruchten Merkmalskombinationen beschränkt.

## Patentansprüche

1. Profilschneideinrichtung zum Ablängen von offenen Profilen aus Kunststoff-oder Metall, mit einem Chassis (2), in dem zwei Scherblätter (3) unter Ausbildung eines Zwischenraums (8) fest angeordnet sind, wobei in den Scherblättern (3) Profilausschnitte (7) ausgespart sind, welche in Einbaulage der Scherblätter (3) in Überdeckung zueinander liegen und eine Profilaufnahme für die abzulängenden Profile bilden, mit einem in dem Zwischenraum (8) der Scherblätter (3) längsbeweglich geführten Messerblatt (4), und mit einer an dem Chassis (2) gehaltenen und auf das Messerblatt (4) wirkenden Hebelbetätigung (5),
**dadurch gekennzeichnet, dass**
die Hebelbetätigung (5) zwei bezüglich des Messerblatts (4) gegenüberliegend angeordnete Handhebel (6) umfaßt, welche derart mechanisch gekoppelt sind, dass jeder Handhebel (6) mit dem anderen Handhebel (6) zwangsgeführt ist.

2. Prolilschneideinrichtung nach Anspruch 1,
**dadurch gekennzeichnet, dass**
die Handhebel (6) jeweils über einen Kniehebel (16) mit dem Messerblatt (4) verbunden sind.

3. Profilschneideinrichtung nach einem der vorhergehenden Ansprüche,
**dadurch gekennzeichnet, dass**
die Handhebel (6) jeweils im Bereich ihres Angelpunktes (15) eine Verzahnung (17) tragen, welche in Einbaulage mit der Verzahnung (17) des jeweils anderen Handhebels (6) kämmt.

4. Profilschneideinrichtung nach einem der vorhergehenden Ansprüche,
**dadurch gekennzeichnet, dass**
die Handhebel (6) jeweils eine abnehmbare Verlängerungsstange (19) ausweisen.

5. Profilschneideinrichtung nach einem der vorhergehenden Ansprüche,
**dadurch gekennzeichnet, dass**
die Profilausschnitte (7) in den Scherblättern (3) eine dem/den abzulängenden Profilen entsprechende Geometrie aufweisen.

6. Profilschneideinrichtung nach Anspruch 5,
**dadurch gekennzeichnet, dass**
die Geometrie der Profilausschnitte (7) mehreren in Überdeckung liegenden Geometrien verschiedener Profile entspricht.

7. Profilschneideinrichtung nach einem der vorhergehenden Ansprüche,
**dadurch gekennzeichnet, dass**
die Geometrie der Profilausschnitte (7) in einem Neigungswinkel (β) von 2° bis 6° gegenüber einer Horizontalen (31) geneigt angeordnet ist.

8. Profilschneideinrichtung nach einem der vorhergehenden Ansprüche,
**dadurch gekennzeichnet, dass**
das Messerblatt (4) eine Schneide (30) mit Schneidabschnitten (33, 34) aufweist, welche gegenüber benachbart liegenden Schneidabschnitten (33, 34) mit unterschiedlichen Schneidenwinkeln (α) gegenüber einer Horizontalen (31) des Messerblatts (4) ausgebildet sind, wobei die Schneidabschnitte (33, 34) in Abstimmung mit der Geometrie der Profilausschnitte (7) derart angeordnet sind, dass den Bereichen des Profilausschnitts (7), welche sich im wesentlichen in Bewegungsrichtung (13) des Messerblatts (4) erstrecken, Schneidabschnitte (33) mit größerem Schneidenwinkel (α) zugeordnet sind als den Bereichen des Profilausschnitts (7), welche sich im wesentlichen in horizontaler Richtung erstrecken.

9. Profilschneideinrichtung nach Anspruch 8,
**dadurch gekennzeichnet, dass**
die Schneidabschnitte (33, 34) in unterschiedlichen axialen Höhen bezüglich der Bewegungsrichtung (13) des Messerblatts (4) in derartiger Abstimmung mit dem Profilausschnitt (7) liegen, dass die Schneide (30) Stoßstellen von winklig zueinander liegenden Bereichen des Profilausschnitts (7) nacheinander erreicht.

10. Profilschneideinrichtung nach Anspruch 8 oder 9,
**dadurch gekennzeichnet, dass**
die Schneide (30) wenigstens eine Spitze (32) aufweist, welche einem im Wesentlichen quer zur Bewegungsrichtung (13) liegenden Bereich des Profilausschnitts (7) zugeordnet ist.
